# EUROPEAN PATENT APPLICATION

(11) **EP 1 880 748 A1**
(43) Date of publication of application: **23.01.2008**
(21) Application number: 06015058.8
(22) Date of filing: 19.07.2006
(51) Int. Cl.: A63F 13/12, H04N 7/173

(54) **Method and system for measuring a reaction time of a community member**

(71) Applicant: Nokia Siemens Networks GmbH & Co. KG, 81541 München (DE)
(72) Inventor: Verhelst, Henk, 3512 Hasselt (BE)
(74) Representative: Kley, Hansjörg

(57) **Abstract**

Currently many TV-shows, quiz programs and alike are based on question-and-answer lists. Reaction time is typically used to select one participant (21) that can answer a question. In order to be independent from delays in a telecommunication network (1) the measuring of the reaction time is carried out locally at the local device (20).

## Description

The present invention relates to a method for measuring a reaction time of a community member according to the preamble of claim 1 and to a corresponding system according to claim 8.

The present invention covers the field of games with a user interaction via a telecommunication network. In the following context the concise technical terms «subscriber» and «local device» vs. «user» and «community member» and «participant» are not always distinguished very sharply. However this does not lead to any ambiguities.

Currently many TV-shows, quiz programs and alike are based on question-and-answer lists. Reaction time is typically used to select one participant that can answer a question. This is typically but not necessarily the participant with the fasted reaction time. Reaction time is mostly measured by a system, where the participants have to hit a button. In another case the reaction time is derived of a delayed response. This is typically used, when selling products to a group. The initial selling price is set to very high value and decreased in time with a specific amount per time unit. The longer you wait the cheaper it gets. The first reacting participant buys the desired product at the price currently valid.

For on-line communities, this concept can be extended to remote connected participants. But a problem arises: For each participant, a different communication delay has taken into account due to the used communication network and the specific user communication line or communication connection or a communication channel. This depends on the specific type of connection as e.g. SMS, MNS, audio channel circuit switched connection.

This problem was solved in the past as follows: For small groups telephone lines in a conference call are used. A question is posed and broadcasted to all participants and one of the participants yells out if he knows the answer. It might be agreed what each participant has to yell, e.g. his name or the answer. This solution is not very comfortable. Connections may be cancelled during the process or delay. A disturbance on a line may be represent a disadvantage for specific participants. The above mentioned solution is only used for small and short sessions.

A different solution is the use of a selection mechanism before the question is posed. Example: The quiz master has a secret number, all participants choose a unique number. The participant who chooses the secret number or is very close to the number may answer the question. This system is not based on reaction time and hence does not have problems with delay or disturbances on the communication lines. This system is however slow due to the separate selection mechanism before each question. This solution is generally solved with IN, as disclosed by the recommendations of the ITU-T, e.g. :
- I.312/Q.1201
   Principles of intelligent network architecture;'
- Q.1211
   Introduction to intelligent network capability set 1;
- Q.1221
   Introduction to intelligent network Capability Set 2;
- Q.1231
   Introduction to Intelligent Network Capability Set 3.

The present invention therefore addresses the problem to avoid the above mentioned drawbacks of measuring remote reaction responses, where communication delay has to be taken into account. A method for measuring the reaction time should be provided, which is not complicate to implement and stable in the sense that a user may not cheat.

This problem is reached by a method for measuring a reaction time of a community member interacting via a local device according to the features specified in claim 1.

In a brief summary the invention allows for on-line communities a time measurement at the remote premises of the participant instead of a time measurement done in a central computer system.

In concrete and preferred embodiment this is typically done in a settopbox. From the settopbox the result is sent back to a central administrator of the community.

Further advantageous embodiments are given in dependant claims.

The invention will now be described in preferred embodiments with reference to the accompanying drawings wherein:

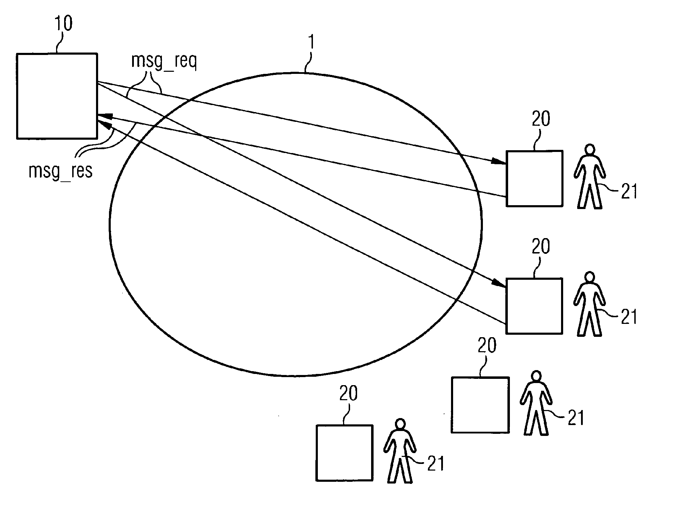

Figure 1 Overview showing the message flux.

Fig. 1 depicts a schematic view of a telecommunication network 1. A plurality of subscribers 20 or local devices 20 are connected to the telecommunication network 1. A local device 20 is used by a participant 21 or a community member 21 for participating to a game or a quiz. The game is administrated by a central administrator 10 which comprises in technical terms a computer system carrying out a program.

The principle functionality of the present method for measuring the reaction time of a participant 21 comprises the following steps:
i) The central administrator (not a person) 10 will be able to select one, several or all participants 21 of the community for participation in a time measurement via its corresponding local devices 20. This is done by a message msg_req sent over the telecommunication network 1 to a defined set of local devices 20. Fig. 1 shows for the sake of simplicity only two messages msg_req.
ii) At the receipt of the message msg_req, each local device 20 recognizes the message msg_req and the local device 20 will prepare the time measurement:
   - start the time measurement,
   - generate a trigger and
   - wait for reaction of the participant 21.
   A participant 21 may be alerted with the beginning of the time measurement with an audio signal, a video signal or both. Additionally this alert may contain a text message containing a specific question put to a participant 21.
iii) After a reaction of the participant 21 - typically done by pushing a specific bottom defining an answer to a specific question - the time measurement is stopped and an identification of the pushed bottom is saved.
iv) The local device 20 prepares a message msg_res to be sent to the central administrator 10. The message msg_res contains at least the following fields (field in the sense of a record structure):
   - identification of the device 20 and/or the participant 21;
   - identification of the pushed bottom;
   - the reaction time measurement, e.g. a number n representing the reaction time in milliseconds.
v) The central administrator 10 stores the plurality of received messages msg_res for a further evaluation, e.g. for ranking the results depending of the identification of pressed buttom as well as depending of the reaction time.

In the message msg_req further indications may be contained as follows defined by the central administrator:
a) A relative time measurement.
   A relative time measurement is done by a local timer, which is not synchronized with a central clock of the telecommunication network. This will be sufficient for many applications.
b) An, absolute time measurement.
   For an absolute time measurement, a local timer is obviously not sufficient. Simple time stamps will neither be sufficient due to possibly international distributed participants 21 and due to non synchronization of the many available clocks. In the case of an absolute time measurement the timing information will be deducted from an online signal with timing information. An example is the timing info contained in a video signal, or a timing info included in an audio signal.
   Alternatively an absolute time measurement can be carried out as follows:
   The local device 20 sends a message at the start of the time measurement and a second message at the end of the time measurement including in both messages the timing information extracted from the online signal. This solution is independent from possible transmission delays.

The central administrator 10 will be able to specify the nature of the further evaluation of the results for ranking purposes; examples are given by:
- fastest reaction time,
- reaction time closest to a specific relative time,
- reaction time closest to a delayed response time.

Further evaluations carried out by the central administrator 10 are feasible as e.g. that after a defined period - a so called time out period - the central administrator will discard messages which arrive later.

### List of reference numerals

- 1: Telecommunication network
- 10: Central administrator
- 20: Subscriber, local device
- 21: User, community member, participant
- msg_req:: Message indicating a measurement request
- msg_res: Message containing a result of a measurement
- n: Number representing a reaction time

### List of acronyms

- ITU-T: INTERNATIONAL TELECOMMUNICATION UNION; TELECOMMUNICATION STANDARDIZATION SECTOR OF ITU

## Claims

1. Method for measuring a reaction time of a community member (21), which community member (21) interacts via a local device (20) with a central administrator (10) and which local device (20) as well the central administrator (10) are connected via a telecommunication network (1);
comprising the steps
A the central administrator (10) transmits a message (msg_req) to the local device (20) indicating a start trigger for measuring the reaction time;
B the local device (20) stops the measuring of the reaction time due to a interaction of the community member (21) and stores the measured reaction time;
C the local device (20) transmits a message (msg_res) containing the measured reaction time to the central administrator (10).

2. The method according to claim 1;
**characterised in that**
in step A the message (msg_req) contains a field specifying the type of measuring the reaction time as an absolute measuring of the reaction time.

3. The method according to claim 2;
**characterised in that**
the timing information for the absolute measuring is derived from a clock of a video- or of an audio-signal transmitted through the telecommunication network (1) to the local device (20) and that in step A an additional message containing timing information at the start of the measurement is sent from the local device (20) to the central administrator (10) and that the message (msg_res) in step C contains timing information at the end of the measurement.

4. The method according to claim 1;
**characterised in that**
in step A the message (msg_req) contains a field specifying the type of measuring the reaction time as a relative measuring of the reaction time.

5. The method according to claim 4;
**characterised in that**
the timing information for the relative measuring is derived from a local timer of the local device (20).

6. The method according to one of the claims 1 to 5;
**characterised in that**
in step A a participant is alerted either by an audio-signal or a video-signal and/or a text message containing a specific question.

7. The method according to claim 6;
**characterised in that**
in step C the message (msg_res) contains an identification of an interaction of the participant (21), preferably an identification of a bottom pressed by the participant (21).

8. System having means (10, 1, 20) for performing the steps of the method according to one of the claims 1 to 7.
